# EUROPEAN PATENT SPECIFICATION

(11) **EP 2 331 389 B1**
(45) Date of publication and mention of the grant of the patent: **11.12.2013**
(21) Application number: 08875748.9
(22) Date of filing: 04.09.2008
(51) Int. Cl.: B62D 35/00

(54) **VEHICLE CAB WITH A FRONT AIR NOZZLE**
.
CABINE DE VÉHICULE À BUSE D'AIR AVANT

(43) Date of publication of application: 15.06.2011
(73) Proprietor: Renault Trucks, 69800 Saint Priest (FR)
(72) Inventor: KINT, Laurent, F-38510 Saint Sorlin de Morestel (FR)
(74) Representative: Putet, Gilles
(86) International application number: PCT/IB2008/003173
(87) International publication number: WO 2010/026444

(56) References cited:
- EP-A- 0 005 095
- DE-A1- 19 607 886
- GB-A- 1 328 770
- US-A- 3 696 732

## Description

### Field of the invention

The present invention relates to an automotive vehicle, especially an industrial vehicle. More specifically, the invention relates to a vehicle cab.

### Technological background

For many years, attempts have been made to improve vehicle efficiency. One factor in an efficient design is the aerodynamic characteristics of a vehicle. The air drag of a vehicle and especially of an industrial vehicle such as a truck is one of the factors that has a direct impact on fuel consumption. Therefore, in a general trend towards rare and expensive energy - whether fossil or not -, aerodynamics is one of the key issue in an efficient vehicle.

A typical industrial vehicle comprises a cab that has a substantially vertical windshield. Although this design is not desirable from an aerodynamic point, it is not possible to conceive an industrial vehicle with a windshield substantially tilted as this would be detrimental to the cargo capacity.

This upright windshield has a detrimental effect on the aerodynamic drag. The air flow passes upwardly along the windshield and then moves rearward above the roof and on both sides of the vehicles, deviating from the corresponding walls of the vehicle.

The drag generated by the air that flows above the cabin roof can be limited by providing a fairing on the vehicle roof. However, the air that flows laterally on the side of the vehicle can create substantial turbulences that are detrimental to a smooth aerodynamic drag. Turbulences are especially acute in the two regions of the cab which are located at the upper corners of the windshield; this has an adverse impact on fuel consumption.

Several devices can be added to the vehicle in order to reduce turbulence and/or to prevent air from deviating away from the vehicle walls. However, these additional devices tend to generate their own drag, and have a limited impact on the vehicle aerodynamics. Moreover, such devices often generate noise when the vehicle is running, which is not comfortable for the driver and the possible passengers.

Document GB-1.328.770 discloses an air guiding member arranged at the corner in the lower part of the cab of a truck while document US-3.696.732 discloses an air guiding member which is arranged near the front upper corner of the cab.

It therefore appears that, from several standpoints, there is room for improvement in industrial vehicles aerodynamics.

### Summary of the invention

An object of the present invention is to provide a vehicle cab with a lower aerodynamic drag.

According to the invention such a vehicle cab has a roof structure; an upright cab front section joining the roof structure at its upper edge; two side walls joining the roof structure at their upper edges, each side wall defining a side envelope wall extending substantially vertically and joining the side edges of the front section; a driver compartment being defined between said roof structure, said upright cab front section and said side walls

Furthermore, the cab incorporates at least one convergent nozzle located at a front upper corner of the cab, said nozzle comprising an inner wall protruding inwardly with respect to the cab side envelope wall and an outer wall substantially level with said side envelope wall so as to channel an air flow from the upright cab front section to a cab side wall at a higher velocity.

Thus, in a vehicle cab according to the invention, the air passing upwardly along the front section edges is canalized inside the nozzle where it is deflected, and then rejected rearward substantially in the longitudinal direction, on the corresponding side of the vehicle cab. Thanks to the nozzle, the outgoing air is made to substantially follow the cab side wall instead of deviating from it, which limits turbulence and aerodynamic drag.

Moreover, in contrast with known devices, the nozzle according to the invention does not extend beyond (outside) the envelope side wall of the cab. Thus, this nozzle does not provoke additional turbulence and does not add its own aerodynamic drag. Therefore, the invention considerably improves the aerodynamics of the vehicle cab and, as a consequence, makes it possible to significantly decrease fuel consumption. With a nozzle outer wall whose side portion is substantially level with said side envelope wall, the invention further limits turbulence.

The nozzle defines a peripherally closed air passageway which ensures that air is adequately canalized and whose cross section decreases from its inlet towards its outlet. With such a convergent nozzle, it is possible to increase air speed from the inlet towards the outlet, so that the outgoing air is more efficiently forced to follow the vehicle cab side wall.

Preferably, the vehicle cab comprises two symmetrical nozzles, each located at a front top corner of the cab.

According to the invention, the nozzle height increases from its inlet towards its outlet, and the nozzle width decreases from its inlet towards its outlet.

It is envisaged that the rear edge of the nozzle outer wall is located less than 30 cm rearward from the front section side edge, preferably less than 20 cm, and more preferably around 15 cm. Such a short distance has proved to be enough to reach the required air speed and to obtain a steady air flow.

In an advantageous way, the nozzle inner wall extends beyond the rear edge of the nozzle outer wall, substantially as far as the rear side edge of the cab, said inner wall diverging with respect to the vertical longitudinal plane of symmetry of the vehicle cab. With this arrangement, air is guided even after it has gone out of the nozzle. This prevents air from deviating away from the cab side wall just a short distance after the rear edge of the nozzle.

Preferably, the top and bottom walls of the nozzle are inclined towards each other from the outer wall to the inner wall. This tends to move air towards the nozzle inner wall, and to limit its deviating movement away from the cab side walls when it goes out from the nozzle.

According to an embodiment of the invention, the vehicle cab comprises a cover designed to be fastened at the front top corner of the cab, said cover forming the nozzle outer wall.

Additionally, the cab has a front section which may comprise a windshield and a top panel joining the roof at its top edge, the top panel being offset forward with respect to the windshield and substantially merging said cover, the nozzle lower inlet being thereby formed between the windshield and the cover. Therefore, the top part of the cab front section forms an even surface from one side to the other and towards the roof, which does not create a barrier to air flow but, on the contrary, forms a guiding means for this air flow. The top panel and/or cover can also be used as sun visors.

These and other advantages will become apparent upon reading the following description in view of the drawing attached hereto representing, as non-limiting examples, embodiments of a vehicle according to the invention.

### Brief description of the drawing

The following detailed description of several embodiments of the invention is better understood when read in conjunction with the appended drawing being understood, however, that the invention is not limited to the specific embodiments disclosed. In the drawing,
Figure1 is a perspective view of a truck comprising a cab according to the invention,
Figure 2 is an enlarged view of one of the front top corners of the cab, without cover,
Figure 3 is a side view of the front top corner of the cab, without cover,
Figure 4 is a simplified view similar to that of Figure 3, showing the air flow,
Figure 5 is a front view of the front top corner of the cab, without cover,
Figure 6 is a simplified top view of the cab, cut along a horizontal plane located substantially in the middle of the nozzle, said cap being equipped with a cover,
Figure 7 is a perspective rear view of the front top corner of the cab and of the cover to be fastened to the cab, showing the air flow.

### Detailed description of the invention

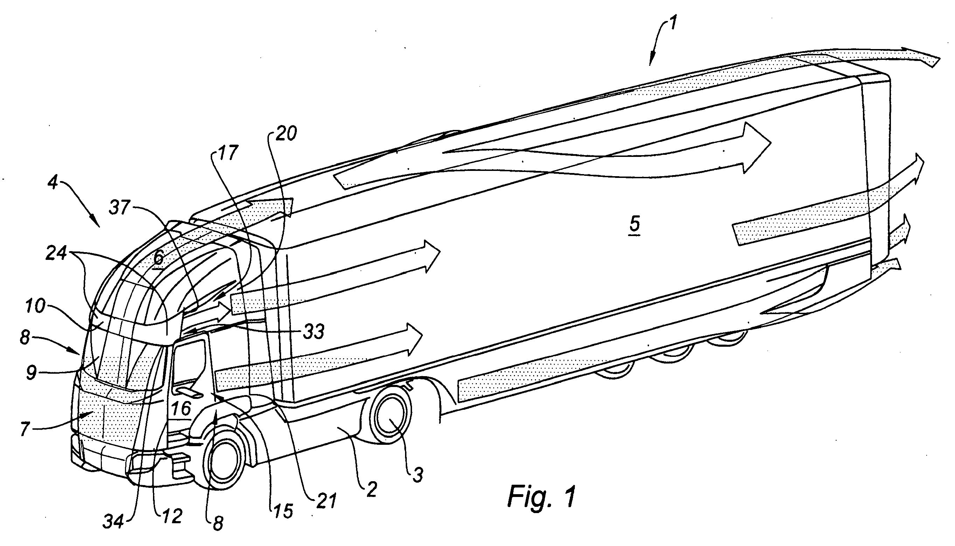

As this is illustrated in Figure 1, an industrial vehicle such as a truck 1 comprises a frame 2 supported by wheels 3, as well as a cab 4. The truck 1 can tow a trailer or semi-trailer 5. The cab 4 has an external roof 6, a front section 7 and two side walls 8. In this embodiment the external roof of the cab is conformed as a cab-integrated wind deflector to ease the flow of air above the height of the semi-trailer. The wind deflector could be provided as a separate piece on top of the cabin roof, in which case the cabin roof could be considered as an internal roof and the top surface of the deflector could be considered as an external roof.

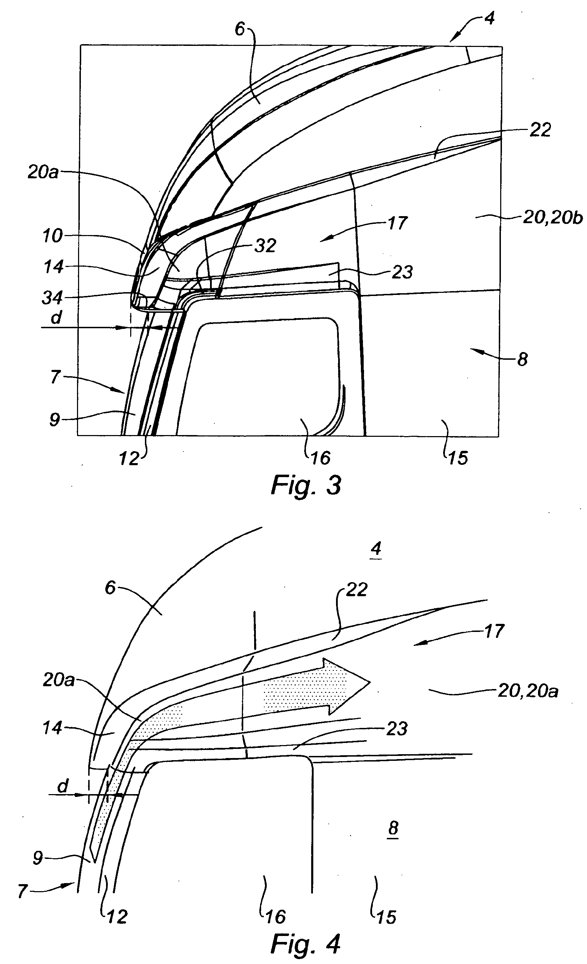

The front section 7 comprises a windshield 9 on top of which lies a transversal top panel 10 which joins and merges with the roof 6 at its upper edge, thus forming a substantially smooth surface to avoid air turbulence. The transversal top panel 10 can be used as a sun visor. The transversal top panel 10 is offset forward with respect to the windshield 9, as illustrated in Figure 3, the offset d being around 10 cm, for example.

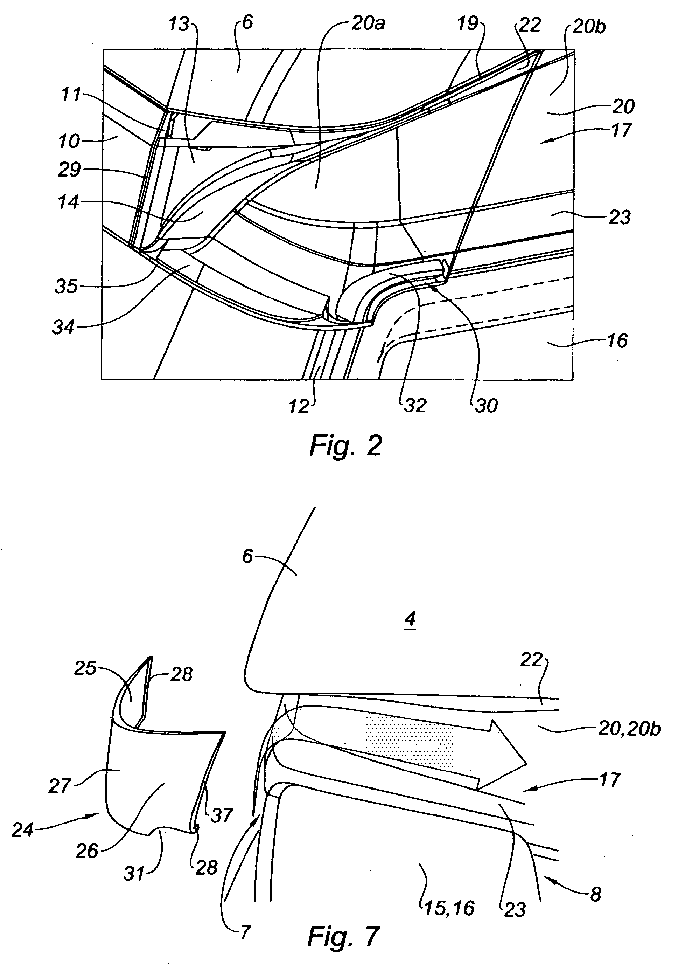

As can be seen from Figures 2, 3 and 5, top panel 10 is less wide than cab 4, i.e. the side edges 11 of said top panel 10 are spaced from the side edges 12 of front section 7. A part 13 is fastened to cab 4 on both sides of top panel 10. Part 13 comprises a side edge 14 which is curved, and comes closer to the corresponding side edge 12 of front section 7 when one goes towards roof 6.

Each side wall 8 comprises a lower part 15 which, in the illustrative embodiment, is substantially planar and includes a door 16 and, just above the door, a top part made of a recess 17 extending up to the roof 6. The recess 17 also extends in the front section 7 of cab 4 as will be explained below.

Each side wall 8 defines a side envelope wall that extends substantially vertically. In the illustrative embodiment, the side envelope wall is substantially planar and can be defined as follows: the lower part of side envelope wall is identical to the lower part 15 of side wall 8, and the top part of side envelope wall lies substantially in the same plane as its lower part, i.e. outward from the recess 17 forming the top part of side wall 8. Therefore, each side envelope wall joins (i) the corresponding side edge 12 of front section 7 at its front edge and (ii) the roof 6 at its top edge 19.

A driver compartment is defined between roof 6, front section 7 and side walls 8, the recess 17 projecting inside said driver compartment. It has to be noted that this recess 17 is located above the driver's or passenger's head.

The recess 17 comprises an inner wall 20 having a front portion 20a and a side portion 20b which is substantially planar and diverges with respect to the vertical longitudinal plane of symmetry P of cab 4. Said side portion 20b extends substantially as far as the corresponding rear side edge 21 of cab 4. The inner wall 20 is therefore setback inwardly with respect to the side envelope wall 8 of cab 4.

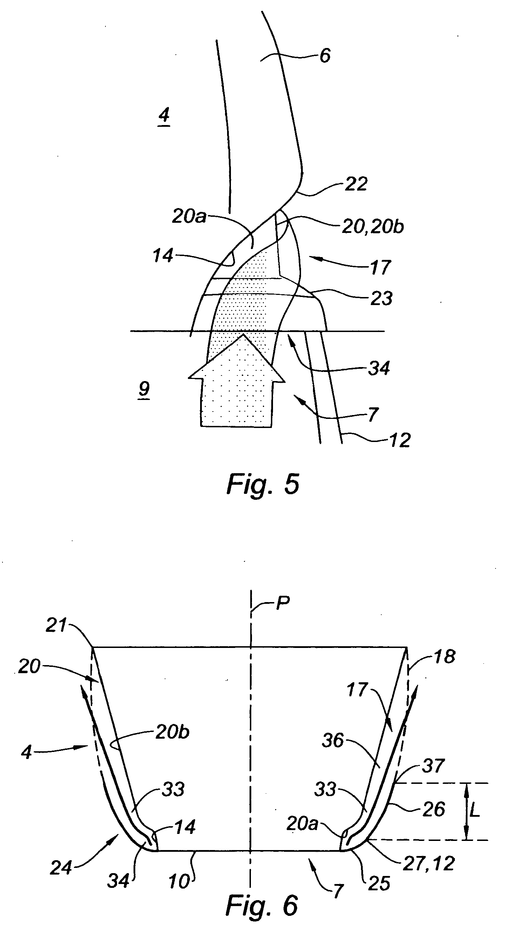

The recess 17 also comprises a top wall 22 whose front portion is constituted by the side edge 14 of part 13, and a bottom wall 23 comprising substantially only a side portion extending rearward no further than the rear edge of the door 16. On the cab side, the top and bottom walls 22, 23 of recess 17 are inclined towards each other from the side envelope wall towards the inner wall 20, as shown on Figure 5.

Because of the diverging shape of the side portion 20b of inner wall 20, the width of top wall 22 and bottom wall 23 decreases from the side edges 12 of front section 7 towards the rear side edge 21 of cab 4. In particular, the width of top wall 22 decreases substantially towards zero.

Moreover, the median plane of bottom wall 23 is substantially horizontal, whereas the median plane of top wall 22 is inclined upward from front section 7 towards the rear side edge 21 of cab 4. Therefore, the height of recess 17 increases from front section 7 towards the rear side edge 21 of cab 4.

A cover 24, shown on Figure 7, comprises a font portion 25 and a side portion 26, said portions 25, 26 being substantially orthogonal and having a rounded junction area 27. The cover 24 also comprises a peripheral edge 28 extending inwards, and located on at least part of the cover border.

The cover 24 is designed to be fitted at the front top corner of the cab 4, the peripheral edge 28 engaging corresponding grooves, i.e. a front vertical groove 29 located between top panel 10 and part 13, and a curved side groove 30 located above the door 16, near the side edge 12 of front section 7. Moreover, a notch 31 can be provided at the bottom rear end of cover 24, to fit with the shape of a corresponding supporting means 32 located at the corner of the cab, above the door 16.

When cover 24 is fastened at the front top corner of cab 4, as illustrated in Figures 1 and 6, it forms a substantially continuous and even surface with the adjacent parts of the cab 4, namely top panel 10, roof 6 and door 16. Cover 24 is spaced outward from the inner wall 20 of recess 17, whereby a peripherally closed nozzle 33 is formed between said inner wall 20 and said cover 24, which constitute the outer wall of the nozzle 33. In the illustrated embodiment, said nozzle outer wall is substantially level with the side envelope wall 8 of cab 4.

The nozzle 33 comprises a lower inlet 34 for air passing upwardly along the windshield 9. Said lower inlet 34 is defined substantially in a horizontal plane between the front portion 20a of the inner wall 20 of recess 17 and a rod 35 supporting the lower border of cover 24 (see figure 2).

The nozzle 33 comprises a side outlet 36 from which the outgoing air is directed rearward. Said outlet 36 is defined substantially in a vertical plane between the side portion 20b of the inner wall 20 of recess 17 and the rear edge 37 of cover 24. Said rear edge 37 is located less than 30 cm rearward from the side edge 12 of the front section 7 of cab 4, i.e. close to said side edge 12 and well before the rear edge of door 16. Preferably, this distance L can be of about 15 cm (see figure 6). It can also be noted that the rear edge 37 of cover 24 is inclined rearward when one goes towards the roof 6.

One important feature of the invention is that the nozzle cross section decreases from its inlet 34 towards its outlet 36. To that end, the nozzle height (between top wall 22 and bottom wall 23) increases but the nozzle width (between the side portion 20b of the inner wall 20 and the side portion 26 of cover 24) decreases from inlet 34 towards outlet 36.

The nozzle 33 may also be equipped with inner fins arranged to direct and stabilize the air flow.

When the truck 1 is in motion, air passes upwardly along the windshield 9 and, laterally, the air flow enters the lower inlet 34 of nozzle 33. This incoming air is canalized into the passageway formed inside the nozzle 33, and the air flow is made to turn twice, i.e. outward and rearward, at the front top corner of cab 4. Then, the air flow moves inside the side portion of nozzle 33, where the air flow is accelerated (because of the converging shape of nozzle 33) and made steady inside the peripherally closed nozzle 33. Finally, air goes out of the nozzle 33 through the outlet 36 and follows the side wall 8 of cab 4 rearward.

It can be noted that the peripherally closed nozzle 33 is quite short on the cab side. However, the short distance between the side edge 12 of front section 7 and the rear edge 37 of nozzle 33 is adequately designed to make it possible to obtain a steady and accelerated outgoing air flow. When going out of the nozzle 33, the air flow has a speed greater than the speed of the main flow, i.e. the air which passes outside the nozzle 33, along cab 4. As an example, the nozzle may be designed so that the speed of the air moving inside the nozzle be about 1,1 or 1,2 greater than the speed of the main flow. Because the outgoing air is canalized by the nozzle and, additionally, accelerated by the nozzle, this outgoing air tends to follow the cab side wall 8 substantially in a parallel direction and nearby, without deviating from said side wall 8. As a consequence, the aerodynamic drag in the front top corner area of the cab is greatly reduced.

Furthermore, since the nozzle 33 is long enough to stabilize the air flow, and particularly to stabilize its moving direction, no or few turbulence is generated at the nozzle outlet 36. This also contributes to improving the cab aerodynamics.

The recess 17 goes on rearward beyond the rear edge 37 of cover 24, as far as the rear edge 21 of cab 4, thereby also playing a part in guiding the outgoing air. Therefore, the air flow going out from nozzle 33 is guided further rearward and slightly forced to deviate from the cab side wall 8 thanks to the diverging shape of inner wall 20. As a consequence, the front section of trailer 5 does not form a barrier to this air flow, which can move rearward along the trailer side walls.

Although only one front top corner nozzle has been described, one can appreciate that, preferably, the cab is provided with two symmetrical nozzles, each located at a front top corner of the cab.

All in all, it is apparent that the air nozzle according to the invention is well integrated in an aerodynamic roof structure of the cab, said roof structure being integral with the cabin or being a separate structure secured on top of the cabin.

Of course, the invention is not restricted to the embodiment described above by way of non-limiting example, but on the contrary it encompasses all embodiments thereof.

## Claims

1. A vehicle cab having a roof structure (6); an upright cab front section (7) joining the roof structure (6) at its upper edge; two side walls (8) joining the roof structure (6) at their upper edges, each side wall (8) defining a side envelope wall extending substantially vertically and joining the side edges (12) of the front section (7); a driver compartment being defined between said roof structure (6), said upright cab front section (7) and said side walls (8);
the cab (4) incorporates at least one convergent nozzle (33) located at a front upper corner of the cab, said nozzle (33) comprising an inner wall (20) protruding inwardly with respect to the cab side envelope wall and an outer wall substantially level with said side envelope wall so as to channel an air flow from the upright cab front section (7) to a cab side wall (8) at a higher velocity, and in that the nozzle height increases from its inlet (34) towards its outlet (36), and in that the nozzle width decreases from its inlet (34) towards its outlet (36).

2. The vehicle cab according to claim 1, **characterized in that** the rear edge (37) of the nozzle outer wall (26) is located less than 30 cm rearward from the front section side edge (12).

3. The vehicle cab according to any one of claims 1 to 2, **characterized in that** the nozzle inner wall (20) extends beyond the rear edge (37) of the nozzle outer wall, substantially as far as the rear side edge (21) of the cab (4), said inner wall (20) diverging with respect to the vertical longitudinal plane of symmetry (P) of the vehicle cab (4).

4. The vehicle cab according to any one of claims 1 to 3, **characterized in that** the nozzle (33) comprises a top wall (22) and a bottom wall (23), said top and bottom walls (22, 23) being inclined towards each other from the outer wall (26) to the inner wall (20).

5. The vehicle cab according to any one of claims 1 to 3, **characterized in that** the nozzle (33) comprises a top wall (22) and a bottom wall (23), where a median plane of the bottom wall (23) is substantially horizontal whereas a median plane of the top wall (22) is inclined upwards from a front section (7) towards a rear side edge (21) of cab (4).

6. The vehicle cab according to any one of claims 1 to 5, **characterized in that** it comprises a cover (24) designed to be fastened at the front top corner of the cab (4), said cover forming the nozzle outer wall.

7. The vehicle cab according to claim 6, **characterized in that** it has a front section (7) comprising a windshield (9) and a top panel (10) joining the roof (6) at its upper edge, the top panel (10) being offset forward with respect to the windshield (9) and substantially merging said cover (24), the nozzle lower inlet (34) being thereby formed between the windshield (9) and the cover (24).

8. The vehicle cab according to any preceding claim, **characterized in that** the inlet is an inlet for air passing upwardly along the windshield.

9. The vehicle cab according to any preceding claim, **characterized in that** the inlet is defined substantially in a horizontal plane.

10. The vehicle cab according to any preceding claim, **characterized in that**, when the truck (1) is in motion, the air flow enters the inlet (34) and is made to turn twice, outward and rearward, and then moves inside a side portion of the nozzle (33) where it is accelerated and made steady inside the peripherally closed nozzle and then goes out of the nozzle (33) through the outlet (36) and followd the sidewall (8) of the cab (4) rearward.

11. The vehicle cab according to any preceding claim, **characterized in that** the nozzle is integrated in an aerodynamic roof structure of the cab, said roof structure being integral with the cabin.

12. The vehicle cab according to any of claims 1 to 11, **characterized in that** the nozzle is integrated in an aerodynamic roof structure of the cab, said roof structure being a separate structure on top of the cabin.

## Patentansprüche

1. Fahrzeugkabine mit einem Dachaufbau (6), einem aufrechten Kabinenvorderabschnitt (7), der mit dem Dachaufbau (6) an seinem oberen Rand verbunden ist, zwei Seitenwänden (8), die an ihren oberen Rändern mit dem Dachaufbau (6) verbunden sind, wobei jede Seitenwand (8) eine Seitenumhüllungswand bildet, die sich im Wesentlichen vertikal erstreckt und mit den Seitenrändern (12) des Vorderabschnitts (7) verbunden ist, einem Fahrerabteil, das zwischen dem Dachaufbau (6), dem aufrechten Kabinenvorderabschnitt (7) und den Seitenwänden (8) gebildet ist,
wobei die Kabine (4) wenigstens eine konvergente Düse (33) umfasst, die an einer vorderen oberen Ecke der Kabine angeordnet ist, wobei die Düse (33) eine innere Wand (20), die nach innen bezüglich der Kabinenseitenumhüllungswand vorsteht, und eine äußere Wand umfasst, die im Wesentlichen auf Höhe der Seitenumhüllungswand liegt, so dass eine Luftströmung von dem aufrechten Kabinenvorderabschnitt (7) zu einer Kabinenseitenwand (8) mit einer höheren Geschwindigkeit kanalisiert wird, und die Düsenhöhe sich von ihrem Einlass (34) in Richtung ihres Auslasses (36) erhöht, und sich die Düsenbreite von ihrem Einlass (34) in Richtung ihres Auslasses (36) verringert.

2. Fahrzeugkabine nach Anspruch 1, **dadurch gekennzeichnet, dass** der hintere Rand (32) der Düsenaußenwand (26) weniger als 30 cm hinter dem Seitenrand (12) des Vorderabschnitts angeordnet ist.

3. Fahrzeugkabine nach einem der Ansprüche 1 bis 2, **dadurch gekennzeichnet, dass** die Düseninnenwand (20) sich über den hinteren Rand (37) der Düsenaußenwand im Wesentlichen so weit wie der hintere Seitenrand (21) der Kabine (4) erstreckt, wobei die innere Wand (20) bezüglich der vertikalen Längssymmetrieebene (P) der Fahrzeugkabine (4) divergiert.

4. Fahrzeugkabine nach einem der Ansprüche 1 bis 3, **dadurch gekennzeichnet, dass** die Düse (33) eine obere Wand (22) und eine untere Wand (23) umfasst, wobei die obere und die untere Wand (22, 23) von der Außenwand (26) aus zu der Innenwand (20) zueinander geneigt sind.

5. Fahrzeugkabine nach einem der Ansprüche 1 bis 3, **dadurch gekennzeichnet, dass** die Düse (33) eine obere Wand (22) und eine untere Wand (23) umfasst, wobei eine Medianebene der unteren Wand (23) im Wesentlichen horizontal ist, wohingegen eine Medianebene der oberen Wand (22) von einem Vorderabschnitt (7) in Richtung eines hinteren Seitenrandes (21) der Kabine (4) nach oben geneigt ist.

6. Fahrzeugkabine nach einem der Ansprüche 1 bis 5, **dadurch gekennzeichnet, dass** sie eine Abdeckung (24) umfasst, die so ausgelegt ist, dass sie an der vorderen oberen Ecke der Kabine (4) befestigt werden kann, wobei die Abdeckung die Düsenaußenwand bildet.

7. Fahrzeugkabine nach Anspruch 6, **dadurch gekennzeichnet, dass** sie einen vorderen Abschnitt (7) aufweist, der eine Windschutzscheibe (9) und eine obere Verkleidung (10) umfasst, die an ihrem oberen Rand mit dem Dach (6) verbunden ist, wobei die obere Verkleidung (10) bezüglich der Windschutzscheibe (9) nach vorne versetzt ist und im Wesentlichen in die Abdeckung (24) übergeht, wobei der untere Düseneinlass (34) hierdurch zwischen der Windschutzscheibe (9) und der Abdeckung (24) gebildet wird.

8. Fahrzeugkabine nach irgendeinem vorhergehenden Anspruch, **dadurch gekennzeichnet, dass** der Einlass ein Einlass für Luft ist, die nach oben entlang der Windschutzscheibe strömt.

9. Fahrzeugkabine nach irgendeinem vorhergehenden Anspruch, **dadurch gekennzeichnet, dass** der Einlass im Wesentlichen in einer horizontalen Ebene gebildet wird.

10. Fahrzeugkabine nach irgendeinem vorhergehenden Anspruch, **dadurch gekennzeichnet, dass**, wenn sich der Lastwagen (1) in Bewegung befindet, die Luftströmung in den Einlass (34) eintritt und zweimal umgelenkt wird, nach außen und nach innen, und dann sich in einen Seitenabschnitt der Düse (33) bewegt, wo sie beschleunigt wird und innerhalb der am Umfang geschlossenen Düse konstant bleibt und dann aus der Düse (33) durch den Auslass (36) heraustritt und der Seitenwand (8) der Kabine (4) nach hinten folgt.

11. Fahrzeugkabine nach irgendeinem vorhergehenden Anspruch, **dadurch gekennzeichnet, dass** die Düse in einem aerodynamischen Dachaufbau der Kabine integriert ist, wobei der Dachaufbau ein Teil mit der Kabine bildet.

12. Fahrzeugkabine nach irgendeinem der Ansprüche 1 bis 11, **dadurch gekennzeichnet, dass** die Düse in einem aerodynamischen Dachaufbau der Kabine integriert ist, wobei der Dachaufbau ein separater Aufbau auf der Oberseite der Kabine ist.

## Revendications

1. Cabine de véhicule ayant une structure de toit (6) ; une section verticale avant de cabine (7) se raccordant à la structure de toit (6) au niveau de son bord supérieur ; deux parois latérales (8) se raccordant à la structure de toit (6) au niveau de leurs bords supérieurs, chaque paroi latérale (8) définissant une paroi d'enveloppe latérale s'étendant sensiblement verticalement et se raccordant aux bords latéraux (12) de la section avant (7) ; un compartiment de conducteur étant défini entre ladite structure de toit (6), ladite section verticale avant de cabine (7) et lesdites parois latérales (8) ;
la cabine (4) comportant au moins une buse convergente (33) située au niveau d'un coin supérieur avant de la cabine, ladite buse (33) comprenant une paroi intérieure (20) faisant saillie vers l'intérieur par rapport à la paroi d'enveloppe latérale de la cabine et une paroi extérieure sensiblement au même niveau que ladite paroi d'enveloppe latérale, afin de diriger un écoulement d'air à partir de la section verticale avant de cabine (7) jusqu'à une paroi latérale de cabine (8) à un vitesse plus élevée, et la hauteur de la buse augmentant à partir de son entrée (34) en direction de sa sortie (36), et la largeur de la buse diminuant à partir de son entrée (34) en direction de sa sortie (36).

2. Cabine de véhicule selon la revendication 1, **caractérisée en ce que** le bord arrière (37) de la paroi extérieure de buse (26) est situé moins de 30 cm en arrière du bord latéral (12) de la section avant.

3. Cabine de véhicule selon la revendication 1 ou 2, **caractérisée en ce que** la paroi intérieure de buse (20) s'étend au-delà du bord arrière (37) de la paroi extérieure de buse, sensiblement jusqu'au bord latéral arrière (21) de la cabine (4), ladite paroi intérieure (20) divergeant par rapport au plan de symétrie longitudinal vertical (P) de la cabine de véhicule (4).

4. Cabine de véhicule selon l'une quelconque des revendications 1 à 3, **caractérisée en ce que** la buse (33) comprend une paroi supérieure (22) et une paroi inférieure (23), lesdites parois supérieure et inférieure (22, 23) étant inclinées en direction l'une de l'autre à partir de la paroi extérieure (26) jusqu'à la paroi intérieure (20).

5. Cabine de véhicule selon l'une quelconque des revendications 1 à 3, **caractérisée en ce que** la buse (33) comprend une paroi supérieure (22) et une paroi inférieure (23), un plan médian de la paroi inférieure (23) étant sensiblement horizontal tandis qu'un plan médian de la paroi supérieure (22) est incliné vers le haut à partir d'une section avant (7) en direction d'un bord latéral arrière (21) de la cabine (4).

6. Cabine de véhicule selon l'une quelconque des revendications 1 à 5, **caractérisée en ce qu'**elle comprend un recouvrement (24) conçu pour être attaché au niveau du coin supérieur avant de la cabine (4), ledit recouvrement formant la paroi extérieure de buse.

7. Cabine de véhicule selon la revendication 6, **caractérisée en ce qu'**elle a une section avant (7) comprenant un pare-brise (9) et un panneau supérieur (10) se raccordant au toit (6) au niveau de son bord supérieur, le panneau supérieur (10) étant décalé vers l'avant par rapport au pare-brise (9) et se joignant sensiblement audit recouvrement (24), l'entrée inférieure de buse (34) étant ainsi formée entre le pare-brise (9) et le recouvrement (24).

8. Cabine de véhicule selon l'une quelconque des revendications précédentes, **caractérisée en ce que** l'entrée est une entrée pour de l'air passant vers le haut le long du pare-brise.

9. Cabine de véhicule selon l'une quelconque des revendications précédentes, **caractérisée en ce que** l'entrée est définie sensiblement dans un plan horizontal.

10. Cabine de véhicule selon l'une quelconque des revendications précédentes, **caractérisée en ce que**, lorsque le camion (1) est en mouvement, l'écoulement d'air entre dans l'entrée (34) et est amené à tourner deux fois, vers l'extérieur et vers l'arrière, puis se déplace à l'intérieur d'une portion latérale de la buse (33) où il est accéléré et rendu stationnaire à l'intérieur de la buse fermée sur sa périphérie, puis sort de la buse (33) à travers la sortie (36) et suit la paroi latérale (8) de la cabine (4) vers l'arrière.

11. Cabine de véhicule selon l'une quelconque des revendications précédentes, **caractérisée en ce que** la buse est intégrée dans une structure de toit aérodynamique de la cabine, ladite structure de toit étant formée d'un seul tenant avec la cabine.

12. Cabine de véhicule selon l'une quelconque des revendications 1 à 11, **caractérisée en ce que** la buse est intégrée dans une structure de toit aérodynamique de la cabine, ladite structure de toit étant une structure séparée au-dessus de la cabine.
